# EUROPÄISCHE PATENTSCHRIFT

(11) **EP 3 613 712 B1**
(45) Veröffentlichungstag und Bekanntmachung des Hinweises auf die Patenterteilung: **01.09.2021**
(21) Anmeldenummer: 19186915.5
(22) Anmeldetag: 18.07.2019
(51) Int. Cl.: C03C 27/04, F21V 3/06, H01J 5/36

(54) **KÖRPER, INSBESONDERE LAMPENKÖRPER, SOWIE VERFAHREN ZUR HERSTELLUNG EINER HERMETISCHEN DICHTUNG**
BODY, IN PARTICULAR LAMP BODY, AND METHOD FOR PRODUCING A HERMETIC SEAL
CORPS, EN PARTICULIER CORPS DE LAMPE, AINSI QUE PROCÉDÉ DE FABRICATION D'UN JOINT D'ÉTANCHÉITÉ HERMÉTIQUE

(30) Priorität: 24.08.2018 DE 102018214319
(43) Veröffentlichungstag der Anmeldung: 26.02.2020
(73) Patentinhaber: Schott AG, 55122 Mainz (DE)
(72) Erfinder: Wintersteller, Fritz, 83317 Teisendorf (DE); Blümel, Helena, 84160 Frontenhausen (DE); Hettler, Robert, 84036 Kumhausen (DE); Wanless, Chris, Nottinghamshire, S803JU (GB)
(74) Vertreter: Sawodny, Michael-Wolfgang

(56) Entgegenhaltungen:
- DE-B3-102004 011 555
- US-A- 3 140 417
- US-A- 5 979 187

## Beschreibung

Die Erfindung betrifft ein Verfahren zur Herstellung einer hermetischen Dichtung zwischen einem rohrförmigen Element und einem Leiter sowie einen Körper, insbesondere einen Lampenkörper, der ein rohrförmiges Element aus einem Glas- oder Glaskeramikmaterial umfasst, in das wenigstens ein Leiter eingebracht wird, sowie ein weiteres Glasmaterial, welches den Leiter umschließt und mit dem rohrförmigen Leiter verbunden ist, hergestellt nach dem erfindungsgemäßen Verfahren.

Generell besteht bei Hochtemperatur-Lichtquellen das Problem, dass sowohl der Anoden- wie der Kathodenleiter hermetisch in den in der Regel rohrförmigen Füllkörper, der bevorzugt aus einem Quarzglas besteht und die Lampe aufnimmt, eingebracht werden muss. Auf Grund der geringen thermischen Expansion des Quarzglases ist es notwendig, ein Dichtungsmaterial zur hermetischen Abdichtung des Leiters einzusetzen, das einen Ausdehnungskoeffizienten aufweist, der zwischen dem Ausdehnungskoeffizienten des Füllkörpers und dem Ausdehnungskoeffizienten des Leiters liegt. Hierfür wird in der Regel im Stand der Technik eine Glasperle aus einem speziellen Glasmaterial eingesetzt. Als Glasmaterial für die Glasperle ist beispielsweise aus der US 5,979,187 B bekannt, ein GS10 Dichtungsglas zu verwenden, das beispielsweise von der Transition Glas Company Ltd, Unit 1 Global Court, Coldpit Road, Dannaby, Industrial State, Dannaby, South Yorkshire, United Kingdom zur Verfügung gestellt wird. Diesbezüglich wird beispielsweise auf www.transitionglass.com/products/gs10-graded-seal-glass-rod/ verwiesen. Das Glas GS10 ist ein Borosilikatglas mit einem SiO₂-Anteil von 84,8 Gewichtsprozent, einem Bi₂O₃-Anteil von 10 Gewichtsprozent, einem Al₂O₃-Anteil von 4,7 Gewichtsprozent, einem BaO-Anteil von 0,45 Gewichtsprozent sowie einem Fe₂O₃-Anteil von 0,01 Gewichtsprozent. Der Ausdehnungskoeffizient des Glases GS10 liegt im Bereich 9,5 bis 11,5*10⁻⁷ 1/Kelvin im Temperaturbereich von 50°C bis 400°C. Eine Glasperle aus einem GS10 Glas wird auch in der EP 1 598 845 A2 offenbart. Sowohl in der EP1 598 845 A2 wie in der US 5,979,187 B ist das Leitermaterial Wolfram und der rohrförmige Lampenkörper, in den der Leiter eingesetzt wird und in dem auch die Lampe angeordnet ist, bevorzugt aus Quarzglas. Bei der US 5,979,187 B handelt es sich um eine Blitz- bzw. Laserlampe. Das Dichtungsglas, dass auch als Zwischenglas bezeichnet wird und bevorzugt ein GS10 Glas ist, wird über Stabaufschmelzen auf eine sich drehende Elektrode aufgebracht. Die US 5,979,187 B stellt den nächstliegenden Stand der Technik ebenso wie die EP1 598 845A1 dar.

Aus der US 2,316,999 B ist für eine Glas-Wolfram-Verschmelzung bei Entladungslampen, das manuelle Anglasen der Glasperle aus einem Dichtungsglas, das einen Ausdehnungskoeffizienten aufweist, der zwischen dem Ausdehnungskoeffizienten des Leiters und des Füllglases liegt, bekannt geworden.

Auch die DE 886 043 C zeigt eine ähnliche Anordnung wie die US 2,316,999 A allerdings sind dort keine Angaben gemacht, wie die Anglasungsperle hergestellt wird.

Auch die JP 2012/199153 A2 zeigt eine Blitzlampe mit einem Quarzglasbehälter und Wolframelektrode, wobei eine zylindrische Glasperle eingesetzt wird, die auf die Wolframelektrode aufgeschmolzen wird.

Aus der EP 1006560 B1 ist eine Durchführung für eine Hochdruckentladungslampe und eine Hochdruckentladungslampe mit einem Körper bekannt geworden. Das rohrförmige Element des Körpers gemäß der EP 1006560 B1 besteht aus einem Keramikmaterial. Die Keramik gemäß der EP 1006560 B1 umfasst Yttrium-Aluminium-Granat (YAG), die kein glaskeramisches System ausbildet, sondern vielmehr eine kristalline Verbindung klassifizieren. Die EP 0982278 B1 zeigt einen Körper für eine Hochdruckentladungslampe. Auch das Entladungslampen-Gehäuse gemäß der EP 0982278 B1 ist ein Keramikgehäuse.

Als Dichtungsmaterial wird bei der aus der EP 1006560 B1 bekannten Hochdruckentladungslampe ein keramischer Dichtungsverbund bzw. Weichporzellan von Al₂O₃ - SiO₂ - Dy₂O₃ eingesetzt. Das thermische Verhalten eines derartigen Dichtungsverbundes ist in Liu Yuzhu, Geng Zhiting, Zhuang Weidong, He Huaqiang, "Study on thermal expansion behavior of Dy2O3 - Al2O3 - SiO2 glass", Journal of Rare earth, 26 (2008) 85 - 88 beschrieben und gänzlich anders als eine Glasdichtung.

Die DE 10 2004 011555B3 zeigt eine Gasentladungslampe mit einem Glaskörper, der einen Glaskolben aufweist, und mit einer von dem Glaskolben umschlossenen Stromführung, die zwei Stromdurchführungs-Drähte aufweist, wobei die Stromdurchführungs-Drähte mittels eines Übergangsglases mit dem Glaskolben gasdicht verbunden sind und wobei die Stromdurchführungs-Drähte zumindest im Bereich des Übergangsglases aus einem Wolfram- oder wolframhaltigen Material gebildet sind. Um bei einer solchen Gasentladungslampe die Betriebssicherheit und Standzeit zu verbessern, ist es erfindungsgemäß vorgesehen, dass der Glaskörper zumindest in dem an das Übergangsglas anschließenden Bereich aus einem Glasmaterial gebildet ist, das einen linearen thermischen Ausdehnungskoeffizienten α (20°, 300°) im Bereich zwischen 2,9 und 3,5 [10⁻⁶/K] aufweist, und dass das Übergangsglas einen linearen thermischen Ausdehnungskoeffizienten α (20°, 300°) im Bereich zwischen 3,5 und 3,9 aufweist.

Aus der US 5,979,187 A ist ein Verfahren zur Herstellung einer Glas-Metall-Dichtung zwischen einem Ende einer Glasröhre und einem Metall bekannt geworden. Das Glasmaterial hat die Form einer Glasperle.

Nachteilig an sämtlichen aus dem Stand der Technik bekannten Verfahren war, dass diese auf Grund der vielen Verfahrensschritte sehr aufwendig gewesen sind. So war es nach dem Stand der Technik üblich, das Glas und die Elektrode vorzuheizen. Aus dem vorgeheizten Glas wurde dann eine Glasperle geformt, die nach Abkühlung manuell auf die einzelnen Leiter aufgebracht wurden, um zusammen mit dem Leiter in die Umhüllung oder den Füllkörper des Lampenkörpers eingesetzt und anschließend mit Hilfe des Dichtungsglases oder Zwischenglases mit der Umhüllung oder dem Füllkörper verschmolzen zu werden. Sämtliche Verfahren zur Herstellung von Glasperlen gemäß dem Stand der Technik haben den Nachteil, dass die Glasperlen nur auf manuelle Art und Weise hergestellt werden können, was zu einer sehr aufwendigen Fertigung führt.

Aufgabe der Erfindung ist es somit, die Nachteile des Standes der Technik zu überwinden und insbesondere ein alternatives Verfahren und einen alternativen Körper anzugeben, der einfach herzustellen ist.

Gelöst wird diese Aufgabe durch ein Verfahren gemäß Anspruch 1 sowie einen Körper, insbesondere Lampenkörper, hergestellt nach diesem Verfahren mit einem rohrförmigen Element aus einem Glas- oder Glaskeramikmaterial sowie einen Leiter mit einem weiteren Glasmaterial, das den Leiter umschließt und in den das rohrförmige Element eingebracht wird. Im Gegensatz zur EP 1006560 B1 ist das rohrförmige Element nicht aus einem Keramikmaterial, sondern aus einem Glas- oder Glaskeramikmaterial. Besonders bevorzugt ist die Verwendung von Quarzglas. Dies hat den Vorteil einer hohen Transparenz, insbesondere für sichtbares Licht. Das weitere Glasmaterial gemäß der Erfindung bildet dann eine hermetische Dichtung zwischen dem rohrförmigen Element aus Glas- oder Glaskeramikmaterial und dem Leiter aus. Erfindungsgemäß ist vorgesehen, dass das weitere Glasmaterial nicht ein herkömmliches Glas sondern ein gesintertes Glas, bevorzugt hergestellt aus einem Glaspulver ist. Das gesinterte Glas liegt beispielsweise in Form eines gesinterten Glasringes vor, wobei der gesinterte Glasring wie die Glasperle nach dem Stand der Technik auf den Leiter aufgebracht ist. Wird der Leiter dann mit dem gesinterten Glasring in das rohrförmige Element eingesetzt und das gesinterte Glasmaterial aufgeschmolzen, so wird eine hermetische Dichtung zwischen dem rohrförmigen Körper und dem Leiter zur Verfügung gestellt. Überraschender Weise wird bei den gesinterten Glasmaterialien eine ausreichende Hermetizität, d. h. Gasdichtheit nach einem Verschmelzen des gesinterten Glasmaterials mit einem Leiter und/oder dem Glasmaterial des rohrförmigen Elementes auch bei hohen Temperaturen von mehr als 600°C, bevorzugt mehr als 800°C, insbesondere mehr als 1000°C, bis zu 2000°C, insbesondere 1500°C, erreicht. Derart hohe Temperaturen treten beispielsweise in Lampenkörpern mit großer Leistung, wie beispielsweise Kinobeleuchtungskörpern, auf. Unter hermetisch dicht oder gasdicht wird in dieser Anmeldung verstanden, dass die He-Leckrate wenigstens kleiner 1*10⁻⁸mbar s⁻¹ bei einem Druckunterschied von 1 bar ist. Besonders bevorzugt kann die He-Leckrate sogar wenigstens kleiner 1*10⁻⁹mbar s⁻¹ sein.

Die Verwendung eines gesinterten Glases oder Dichtungsmaterial ist gänzlich verschieden zu den aus der EP 1006560 B1 oder DE 69931877 T2 bekannten Keramik-Dichtungsmaterialien. So zeichnet sich die Verwendung von Sinter-Glas als Dichtungsmaterial dadurch aus, dass ein gewisser Anteil Luft eingeschlossen werden kann, der eine Rissausbildung hemmt. Sintergläser sind durch Sintern von Glaspulver hergestellte poröse Gläser. Unter Sintern wird das Zusammenbacken von Pulver, verursacht durch ein Pressen bei hohen Drücken, verstanden. Insbesondere können Sintergläser aus Borosilikat-haltigen Gläsern erhalten werden. Beispielweise lassen sich Alkaliborosilikatgläser in eine lösliche (natriumreiche Boratphase) und eine unlösliche Phase (Silicat = Matrix) entmischen, wenn sie einer Thermobehandlung unterworfen werden. Durch Extraktion mit Mineralsäure lässt sich die lösliche Phase entfernen, und es bleibt ein schwammartiges Silikat-haltiges Netzwerk zurück. Durch einen sich anschließenden Sinterungsprozess wird dann ein Silikat-Sinterglas erhalten, das sich in seinen Eigenschaften nur wenig von einem Quarzglas unterscheiden lässt. Ebenfalls für einen Fachmann überraschend ist, dass die Glasmaterialien mit sehr hohen Transformationstemperaturen Tg von mehr als 500°C, bevorzugt mehr als 550°C, insbesondere mehr als 570°C und damit einhergehend hohen Erweichungstemperaturen bei einer Viskosität von η= 10^{7,6}dPa/s von mehr als 800°C, bevorzugt mehr als 900°C zu einem Glasring gesintert werden können, der nach Verschmelzen mit dem Leiter und/oder rohrförmigen Element über eine ausreichende Hermetizität, d. h. Gasdichtheit, als Dichtungsmaterial verfügt. Dies umso mehr, da die Verarbeitung des Glasmaterials bei Temperaturen größer 800°C problematisch ist.

Im Gegensatz zu den Glasperlen als Dichtungsglas wie sie im Stand der Technik verwendet werden, die sich durch eine hohe Transparenz auszeichnen, ist der gesinterte Glasring kein transparentes Glas, sondern milchig trüb, so dass der gesinterte Glasring aufgrund seiner unterschiedlichen, optischen Eigenschaften leicht identifiziert werden kann. Die unterschiedliche Herstellweise des gesinterten Glasringes führt somit zu sichtbar anderen Glasdichtungen in Form von gesinterten Glasringen als die Glasperlen im Stand der Technik. Der gesinterte Glaskörper ist aufgrund von eingeschlossenen Luftblasen im Gegensatz zu den Glasperlen aus dem Stand der Technik opak und kann gegenüber Glasperlen aus dem Stand der Technik klar unterschieden werden. Die unterschiedlichen optischen Eigenschaften des gesinterten Glases bleiben auch dann erhalten, wenn der gesinterte Glasring zur Herstellung der gasdichten Verbindung von Lampenkörper und Leiter aufgeschmolzen wird.

Um den großen Unterschied im Ausdehnungskoeffizienten zwischen dem Glasmaterial des rohrförmigen Elementes und dem Leitermaterial, das in das rohrförmige Element eingesetzt wird und damit Hermetizität, d.h. Gasdichtheit wie zuvor definiert sicherzustellen, ist es von Vorteil, wenn der Ausdehnungskoeffizient des als Dichtungsglas eingesetzten weiteren Glasmaterials zwischen dem Ausdehnungskoeffizienten des Glas- oder Glaskeramikmaterials des rohrförmigen Elementes und dem Ausdehnungskoeffizienten des Leiters liegt. Bezeichnet man den thermischen Ausdehnungskoeffizienten des weiteren Glasmaterials des Dichtungsglases mit α₁ und den thermischen Ausdehnungskoeffizienten des Glas- oder Glaskeramikmaterials des rohrförmigen Elementes mit α₂ sowie den Ausdehnungskoeffizienten des Leiters mit α₃ so ist es vorteilhaft, wenn der Wert des ersten Ausdehnungskoeffizienten α₁ zwischen dem Wert von α₂ und α₃ liegt. Eine derartige Dichtung wird als "direct seal" bezeichnet.

Denkbar ist aber auch, dass das Dichtungselement nicht aus einem einzigen Glas besteht, sondern aus mehreren Glasmaterialien mit abgestuften Ausdehnungskoeffizienten α₁ bis aₙ und das Glasmaterial des rohrförmigen Elementes den Wert αₙ₊₁ aufweist. Der Wert des Ausdehnungskoeffizienten des Leiters ist αₙ₊₂. Die Werte der Ausdehnungskoeffizienten α₁ bis aₙ liegen dann zwischen dem Wert des Ausdehnungskoeffizienten des Glasmaterials des rohrförmigen Elementes αₙ₊₁ und dem Wert des Ausdehnungskoeffizienten des Leiters αₙ₊₂. Derartige Dichtungsgläser werden als "graded seal" bezeichnet und finden vor allem dann Verwendung, wenn hohe Ströme in den Lampenkörper geführt werden müssen, was zu hohen Erwärmungen des Lampenkörpers und der Zuleitung, bevorzugt aus Wolfram, von mehr als 800°C führt. Bei großen Durchmessern des Leiters ist es möglich, dass der Dehnungsunterschied zwischen Leiter und Lampenkolben mit einem direct seal nicht überbrückt werden kann. In einem solchen Fall wird dann ein graded seal verwandt, das den Dehnungsunterschied überbrückt.

Erfindungsgemäß umfasst der Lampenkörper, insbesondere der rohrförmige Lampenkörper, im Gegensatz zum Stand der Technik kein Keramikmaterial, sondern ein Glasmaterial oder eine Glaskeramik. Sowohl das Glasmaterial wie die Glaskeramik zeichnen sich durch eine hohe Transparenz, insbesondere auch im sichtbaren Wellenlängenbereich bis in den UV und IR-Bereich, aus.

Bevorzugt wird als Glasmaterial für den Lampenkörper Quarzglas, das sich durch eine hohe Transparenz im Bereich 190 nm - 3500 nm auszeichnet und insbesondere auch durchlässig für UV-Licht ist, verwendet.

Der Ausdehnungskoeffizient von Quarzglas als Glas des rohrförmigen Körpers ist 0, 5-0,6*10⁻⁶K⁻¹. Der Ausdehnungskoeffizient des Leiters, der bevorzugt aus Wolfram ist, liegt bei 4,4-10⁻⁶K⁻¹. Die Ausdehnungskoeffizienten der beispielhaft verwendeten Glasmaterialien gemäß der Erfindung für den gesinterten Glasring liegen, wie nachfolgende Tabelle zeigt, dazwischen.

**Tabelle 1: Ausdehnungskoeffizienten von beispielhaft verwandten Gläsern**

| Ausdehnungskoeffizient 10⁻⁶K⁻¹ | TGP | Schott |
|---|---|---|
| Quarzglas 0.5 - 0.6*10⁻⁶K⁻¹ | | |
| 1.1 | GS10 | |
| 1.2 | | |
| 1.3 | | 8228 |
| 1.4 | | |
| 1.5 | GS15 | |
| 1.6 | | |
| 1.7 | | |
| 1.8 | GS20 | |
| 1.9 | | |
| 2.0 | | 8229 |
| 2.1 | | |
| 2.2 | GS22 | |
| 2.3 | | |
| 2.4 | | |
| 2.5 | GS25 | |
| 2.6 | | |
| 2.7 | | 8230 |
| 2.8 | | |
| 2.9 | GS30 | |
| 3.0 | | |

Wenn der gesinterte Glaskörper aus einem einzigen Dichtungsglas (z. B. GS10) besteht, so wird dies als "direct seal" bezeichnet. Besteht der gesinterte Glaskörper hingegen aus mehreren Dichtungsgläsern, so bezeichnet man dies als "graded seal". Bei einem "graded seal" werden die Glaspulver zunächst separat gepresst und die Presslinge anschließend zusammen gesintert, ergebend das "graded seal".

Beispiele für ein "direct seal" und ein "graded seal" sind:
Direct seal: Wolfram - GS10 - Quarzglas
Graded seal: Wolfram - GS30 - GS25 - GS20 - GS10 - Quarzglas

Wenn als Glasmaterial für das rohrförmige Element Quarzglas Verwendung findet, so erlaubt das Quarzglas durch seine hohe Erweichungstemperatur des Weiteren eine hohe Lampenbetriebstemperatur. Die äußerst niedrige Dehnung des Quarzglases ist ein weiterer Vorteil, der zu einer hohen Temperatur-Schockfestigkeit führt.

Als Dichtungsglas findet beispielsweise, wie zuvor erwähnt, ein Borosilikatglas wie das Dichtungsglas GS10, GS15, GS20, GS25, GS30 Verwendung. Als alternative Gläser kommen auch die Schott-Gläser 8228, 8229 und 8230 in Betracht. Betreffend die Eigenschaften dieser Gläser wird auf www.schott.com/tubing/german/products/properties/matched-sealing.html verwiesen. Bei den Schott-Gläsern 8228, 8229 und 8230 handelt es sich um Übergangsgläser, die mit anderen Gläsern verschmelzbar sind.
Um die Glasperle in Form eines gesinterten Glasringes farblich zu kennzeichnen, kann vorteilhafterweise dem Dichtungsglas eine Farbkomponente zugegeben werden, beispielsweise CoO, Fe₂O₃, CrO₂ Bevorzugt werden die Farbkomponenten dem Glaspulver vor Sintern des Glasringes zugegeben.

Als Material für den Leiter kommen insbesondere Wolfram, aber auch Molybdän oder Kovar, zum Einsatz. Bevorzugt werden Materialien mit einem thermischen Ausdehnungskoeffizienten, der so nah wie möglich bei der thermischen Dehnung des Lampenkolbens ist, um möglichst wenig Unterschied in der thermischen Dehnung durch das Dichtungsglas überbrücken zu müssen.

Neben dem Körper, insbesondere Lampenkörper gemäß der Erfindung, gibt die Erfindung auch noch ein Verfahren zur Herstellung eines Glasmaterials, das eine Dichtung zwischen einem rohrförmigen Element und einem Leiter ausbildet, an. Das erfindungsgemäße Verfahren zeichnet sich dadurch aus, dass das Glasmaterial gemahlen, trockengepresst und gesintert wird.

Der erfindungsgemäße Prozess zur Herstellung eines gesinterten Glasrings ist gegenüber den herkömmlichen Prozessen deutlich weniger aufwendig und lässt die Herstellung von vielen Glasringen parallel zu, was in Folge zu einer Reduktion des Fertigungsaufwandes und insbesondere auch der Kosten führt.

Ein weiterer Vorteil des erfindungsgemäßen Verfahrens ist, dass mit Hilfe des gesinterten Glasrings bei geringen Toleranzen praktisch gleichbleibende Dimensionierungen des Glasringes möglich sind. Ein Einfluss beispielsweise eines Bedieners bei der Herstellung der Glasperle auf die Qualität kann damit ausgeschlossen werden. In einer weiteren Ausführungsform des Verfahrens ist vorgesehen, die gesinterten Glasringe als Glasperle durch Färbung zu kennzeichnen. Dies ist dadurch möglich, dass Farbkomponenten dem Glaspulver zugegeben werden und in das Glasmaterial eingesintert werden. Die mittlere Korngröße des Granulates und Glaspulvers liegt beispielsweise im Bereich 25 bis 150µm . Die Sintertemperatur liegt im Bereich der Erweichungstemperatur des Glases die mit einer Viskosität von 10^{7*6}dPas definiert ist. Die Erweichungstemperaturen der verwandten Gläser sind bevorzugt größer 850°C, insbesondere größer 900°C und liegen im Bereich 850°C bis 1500°C, insbesondere 900°C bis 1400°C.

Eine Glasperle aus Sinterglas, das erfindungsgemäß als Dichtungsmaterial Verwendung findet, hat gegenüber dem Stand der Technik den weiteren Vorteil, dass Sinterkörper einen gewissen Anteil an eingeschlossen Luftblasen aufweisen können. Dieser Anteil liegt im Bereich von 5 bis 20 Vol%. Derartige Blasen haben den Vorteil, dass sie die Rissausbreitung in Gläsern hemmen. Ein Riss in einem Glas hat an seiner Spitze einen sehr engen Radius. Befindet sich der Riss unter Zugspannung tritt durch den engen Radius an der Spitze eine sehr hohe Kerbwirkung auf, was den Riss nach vorne ausbreiten lässt. Trifft ein derartiger Riss auf eine Luftblase, definiert nun der Blasendurchmesser den für die Kerbwirkung zuständigen Radius an der Rissspitze. Da diese Radien der Luftblasen aber deutlich größer sind als die Radien von üblichen Rissen, nimmt die Kerbwirkung ab und der Riss kommt zum Stehen. Mit dem gesinterten Glasring wird somit ein Dichtungsglas mit deutlich geringeren Rissen und Risswahrscheinlichkeiten zur Verfügung gestellt. Die Luftblasen sind auch noch im gesinterten Glas enthalten, wenn diese mit dem Leiter und/oder dem Glas- oder Glaskeramikmaterial des rohrförmigen Elementes verschmolzen sind.

Im Gegensatz zu EP 1006560 B1 ist die Glasperle als Dichtungsmaterial auf den Lampenkörper aufgesetzt, wohingegen bei der EP 1006560 B1 das Dichtungsmaterial zwischen Lampenkörper und Elektrode eingebracht ist. Des Weiteren handelt es sich bei dem Dichtungsmaterial im Stand der Technik, insbesondere der EP 1006560 B1, um eine Keramik bzw. ein Weichporzellan, was gänzlich verschieden zum erfindungsgemäßen Sinterglas als Dichtungsmaterial ist.

Die Erfindung soll nachfolgend ohne Beschränkung hierauf anhand der Figuren beispielhaft beschrieben werden. Es zeigen:
- Figur 1 einen Lampenkörper gemäß dem Stand der Technik
- Figur 2 die einzelnen Schritte eines erfindungsgemäßen Verfahrens zur Herstellung eines erfindungsgemäßen Dichtungsglasringes.

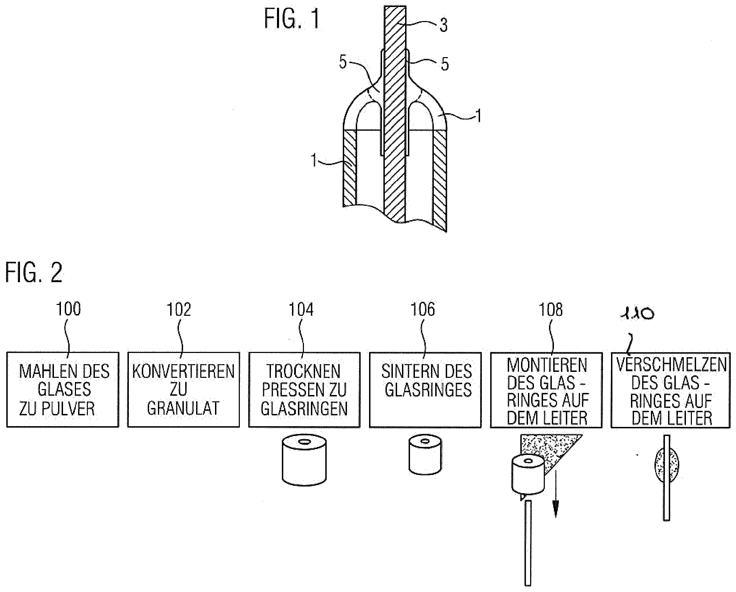

In Figur 1 ist ein Lampenkörper, bestehend aus einem rohrförmigen Element 1, in das ein Leiter 3, bevorzugt aus Wolfram, eingesetzt wird, gezeigt. An der Stelle, an der der Leiter in den rohrförmigen Lampenkörper eingesetzt wird, ist eine Glasperle 5 als Dichtungsglas gemäß dem Stand der Technik vorgesehen, wobei das Glasmaterial der Glasperle einen thermischen Ausdehnungskoeffizienten aufweist, der zwischen dem thermischen Ausdehnungskoeffizienten des Leitermaterials und des rohrförmigen Lampenkörpers liegt. Durch Aufschmelzen wird mit Hilfe der Glasperle als Dichtungsglas oder als Zwischenglas wird auf Grund der Wahl des Ausdehnungskoeffizienten des Dichtungsglases ein Leiter zwischen dem Dichtungsglas und dem Hüllglasmaterial weitgehend spannungsfrei in das rohrförmige Element hermetisch dicht, d. h. gasdicht, eingesetzt.

Während das Aufbringen der Glasperle im Stand der Technik bevorzugt in einem aufwendigen Prozess erfolgte, ist erfindungsgemäß vorgesehen, wie in Figur 2 dargestellt, an Stelle einer Glasperle, die in einem aufwendigen Verfahren auf den Leiter aufgebracht wird, ein gesinterter Glasring als Dichtungsglas einzusetzen, der erfindungsgemäß aus einem Glaspulver mit daran anschließender Sinterung gewonnen wird.

Figur 2 zeigt die einzelnen Prozessschritte des erfindungsgemäßen Verfahrens im Detail.

Zunächst wird ein Glasmaterial mit einem hohen Tg und einer hohen Verarbeitungstemperatur, wie beispielsweise die Schott Gläser 8228, 8229, 8230 zu einem Glaspulver gemahlen, wie in Schritt 100 dargestellt. Daran anschließend wird das Glaspulver zu einem Granulat konvertiert gemäß Schritt 102. Dem Glaspulver können zur eindeutigen Identifizierung Farbkomponenten vor einer Konvertierung zu einem Granulat zugegeben werden. Das Granulat wird dann zu Glasringen trocken gepresst, wie in Schritt 104 gezeigt. Nach dem Trockenpressen der Glasringe werden die Glasringe gesintert gemäß Schritt 106. Die gesinterten Glasringe werden dann über die Leiter oder Elektroden geführt und so auf die Leiter oder Elektroden aufgebracht bzw. aufgezogen. Dies ist in Schritt 108 gezeigt. Dann wird das Dichtungsglas in Form eines gesinterten Glasringes in Schritt 110 auf dem Leiter bzw. der Elektrode angeschmolzen und anschließend der Lampenkörper durch erneutes Verschmelzen des Leiters mit dem gesinterten Dichtungsglas mit dem Glas- oder Glaskeramikmaterial des Lampenkörpers hermetisch dicht verschlossen. Beim ersten Aufschmelzen des Presslings auf den Stift wird der Übergang zwischen Leiter und Glasperle bereits hermetisch abgedichtet. Auch die Glasperle an sich wird dadurch gasundurchlässig. Anschließend daran erfolgt das Verschmelzen mit dem Glas- oder Glaskeramikmaterial des rohrförmigen Lampenkörpers wie zuvor beschrieben.

Das Verfahren soll nachfolgend anhand eines Ausführungsbeispiels ohne Beschränkung hierauf näher erläutert werden.

Gemäß dem erfinderischen Verfahren wird das Glasmaterial zunächst zu einem Glaspulver gemahlen. Die Mahlung kann zum Bespiel in Keramiktrommeln unter Zugabe von Keramikmahlsteinen erfolgen. Typischerweise wird eine mittlere Korngröße des Pulvers von 10µm angestrebt. Im Anschluss werden bei Bedarf pulverförmige Farbpigmente wie z.B. CoO, Fe₂O₃ oder CrO₂ in einem Anteil von 0,5-5 Vol-%, bevorzugt 0,5-2 Vol-%, hinzugefügt. Das Pulver wird mit einem organischen Binder wie z.B. Plextol® der Firma Synthomer (www.synthomer.com) vermischt und in einem sog. Sprühturm durch eine Düse zerstäubt. Durch die Oberflächenspannung des flüssigen organischen Binders bilden sich runde Tröpfchen die durch eine Trocknung während des Sprühens im Turm dann runde, rieselfähige Partikel bilden, das sogenannte Granulat. Nach dem Mahlen und Ausbilden des Granulats wird das Granulat zu einem Glasring trocken gepresst Hierzu wird in einer mechanischen Presse ein Hohlraum, der dem Negativ des zu formenden Teils entspricht, gefüllt und mechanisch verpresst. Dieser Pressling wird anschließend in einem Ofenprozess vom organischen Binder befreit und versintert. Der organische Binder wird in einer ersten Phase bei Temperaturen zwischen 200-300°C aus dem Pressling ausgetrieben und dabei verbrannt. Anschließend durchläuft der Pressling eine Zone zur Versinterung. Die Sintertemperatur liegt hier bei der Erweichungstemperatur des jeweiligen Glases. Die Erweichungstemperatur ist durch eine Glasviskosität von 10^{7,6}dPas definiert. Bei den verwandten Glasmaterialien für das Dichtungsglas, beispielsweise dem Schott Glas 8228, 8229, 8230 liegt die Erweichungstemperatur im Bereich 900°C bis 1200°C. Die Sinterdauer bei der oder nahe der Erweichungstemperatur beträgt 5 bis 30min.

Durch die Sinterung erhält man einen mechanisch stabilen Formkörper. Der Leiter wird sodann mit dem gesinterten Glasring als Dichtungsglas versehen. In einem weiteren thermischen Prozess wird nun dieser Sinterling oder der gesinterte Glasring an den Leiter angeschmolzen. Die Temperatur dieses Anschmelzens liegt im Bereich einer Glas-Viskosität von 10⁶ - 10⁴ dPas. Bei den verwandten Glasmaterialien, beispielsweise den Schott-Gläsern 8228, 8229, 8230 liegen die Verarbeitungstemperaturen mit einer Viskosität im Bereich 10⁶ bis 10⁴ dPas zwischen 1200°C und 1800°C. Während des Anschmelzens bildet sich durch die Oberflächenspannung des zähflüssigen Glases eine runde, fest mit dem Leiter verschmolzene Glasperle an dem gesinterten Glasring aus. Die Zeitdauer hierfür beträgt wiederum 5 bis 30 min. Die Komponenten werden im Prozess durch temperaturstabile, von flüssigem Glas nicht benetzbare Formen wie z.B. Graphit oder Bornitrid gehalten.

Dieser Verbund aus Leiter und Übergangsglas, der wie oben beschrieben erhalten wurde, kann anschließend beispielsweise in einen rohrförmigen Quarzglaskörper eingesetzt werden und erlaubt nach Verschmelzen mit dem Lampenkörper ein Abdichten zwischen Leitermaterial und rohrförmigem Körper mit Hilfe des Glasrings bzw. der Glasperle, wobei der Quarzglaskörper hermetisch dicht über den Glasring bzw. die Glasperle mit dem Leiter verbunden ist.

Der erfindungsgemäße Körper und das erfindungsgemäße Verfahren zum Herstellen eines Dichtungsglases in Form eines gesinterten Glasringes zeichnet sich gegenüber herkömmlichen Verfahren durch eine leichtere Herstellbarkeit, eine hohe Qualität der Glasperle, wiederholbare Dimensionen und Toleranzen, sowie die Möglichkeit, färbende Komponenten zusetzen zu können, aus. Des Weiteren zeichnet sich die Glasperle dadurch aus, dass Risse vermieden werden.

Ein weiterer Vorteil der Erfindung ist, dass eine Farbe oder ein versteckter Marker ins gesinterte Glas eingebracht werden kann und das Produkt anhand der Farbe oder anhand eines versteckten Markers eindeutig identifiziert werden kann und damit ein Schutz vor Produktfälschungen durch das neue Verfahren ermöglicht wird.

## Patentansprüche

1. Verfahren zur Herstellung einer hermetischen Dichtung zwischen einem rohrförmigen Element aus einem Glas- oder Glaskeramikmaterial für einen Lampenkörper und einem Leiter mit einem weiteren Glasmaterial in Form eines Sinterglases ausbildet, umfassend folgende Schritte:
- Mahlen des weiteren Glasmaterials zu einem Glaspulver (100)
- Ausbilden eines Granulates aus dem gemahlenen Glaspulver (102) Trockenpressen des Granulats zu einem Glasring (104)
- Sintern des Glasringes (106)
- Versehen des Leiters mit dem Glasring (108)
- Anschmelzen des Glasringes mit dem Leiter und hermetisches Abdichten des Leiters und des rohrförmigen Elementes mit dem Glasring (110) durch Verschmelzen, derart dass das Sinterglas einen Anteil von 5 bis 20 Vol-% an eingeschlossenen Luftblasen umfasst.

2. Verfahren nach Anspruch 1,
**dadurch gekennzeichnet, dass**
dem Glaspulver Farbkomponenten zugegeben werden.

3. Verfahren nach einem der Ansprüche 1 bis 2,
**dadurch gekennzeichnet, dass**
nach Mahlen des Glaspulvers und vor Bildung des Granulates das Glaspulver mit einem organischen Binder versehen und anschließend zerstäubt wird und/oder
das Glaspulver auf eine mittlere Korngröße im Bereich 5 bis 20µm gemahlen wird und/oder das Granulat, das aus dem gemahlenen Glaspulver erhalten wird, eine mittlere Korngröße im Bereich 25 bis 150µm aufweist.

4. Verfahren nach wenigstens einem der Ansprüche 1 bis 3,
**dadurch gekennzeichnet, dass**
das Sintern des weiteren Glasmaterials bei einer Sintertemperatur des weiteren Glasmaterials, bei der die Viskosität des Glasmaterials im Bereich 1*10⁷ bis 1*10⁸ dPas liegt, für bevorzugt 5 bis 30 Minuten erfolgt.

5. Verfahren nach einem der Ansprüche 1 bis 4,
**dadurch gekennzeichnet, dass**
nach dem Sintern der Glasring auf den Leiter montiert wird und in einem weiteren Temperaturschritt der Sinterling auf den Leiter aufgeschmolzen wird.

6. Verfahren nach Anspruch 5,
**dadurch gekennzeichnet, dass**
das Aufschmelzen des Glasrings auf den Leiter bei einer Viskosität von 10⁻³ - 10⁻⁶ dPas für 5 bis 30 Minuten erfolgt.

7. Körper, insbesondere Lampenkörper, hergestellt nach einem Verfahren gemäß einem der Ansprüche 1 bis 6, umfassend:
- ein rohrförmiges Element (1) aus einem Glas- oder Glaskeramikmaterial, wobei wenigstens ein Leiter, bevorzugt ein metallischer Leiter (3) in das rohrförmige Element (1) eingebracht ist und wenigstens
- ein weiteres Glasmaterial den Leiter umschließt und mit dem rohrförmigen Element verbunden ist
**dadurch gekennzeichnet, dass**
das weitere Glasmaterial (5) eine hermetische Dichtung zwischen dem rohrförmigem Element (1) und dem Leiter, bevorzugt metallischen Leiter (3) ausbildet und das weitere Glasmaterial (5) ein gesintertes Glas, insbesondere einen gesinterten Glasring umfasst, der den metallischen Leiter nach dem Aufschmelzen vollständig umschließt und hermetisch zum rohrförmigen Element hin abdichtet.

8. Körper nach Anspruch 7,
**dadurch gekennzeichnet, dass**
das weitere Glasmaterial einen ersten Ausdehnungskoeffizienten α₁ und das rohrförmige Element ein Glas- oder Glaskeramikmaterial mit einem zweiten Ausdehnungskoeffizienten α₂ umfasst und der Leiter einen dritten Ausdehnungskoeffizienten α₃ aufweist und der Wert des ersten Ausdehnungskoeffizienten α₁ zwischen dem Wert des zweiten Ausdehnungskoeffizienten α₂ und dem dritten Ausdehnungskoeffizienten α₃ liegt.

9. Körper nach Anspruch 7 oder 8,
**dadurch gekennzeichnet, dass**
mehrere weitere Glasmaterialien mit abgestuften Ausdehnungskoeffizienten α₁ bis αₙ und das rohrförmige Element ein Glas- oder Glaskeramikmaterial mit einem zweiten Ausdehnungskoeffizienten αₙ₊₁ umfasst und der Leiter einen dritten Ausdehnungskoeffizienten αₙ₊₂ aufweist und die Werte der abgestuften Ausdehnungskoeffizienten α₁ bis αₙ zwischen dem Wert des zweiten Ausdehnungskoeffizienten αₙ₊₁ und dem dritten Ausdehnungskoeffizienten α_{µ+2} liegen.

10. Körper nach einem der Ansprüche 7 bis 9,
**dadurch gekennzeichnet, dass**
die Transformationstemperatur Tg gemäß ISO 7884-8 des weiteren Glas- oder Glaskeramikmaterials größer als 500°C, bevorzugt größer als 550°C, insbesondere größer als 570°C ist.

11. Körper nach einem der Ansprüche 7 bis 10,
**dadurch gekennzeichnet, dass**
die Erweichungstemperatur gemäß ISO 7884-3 des weiteren Glas- oder Glaskeramikmaterials bei einer Viskosität von 10^{7,6} dPa*s des Glasmaterials, bevorzugt größer 850°C, insbesondere größer 900°C ist.

12. Körper nach einem der Ansprüche 7 bis 11,
**dadurch gekennzeichnet, dass**
der thermische Ausdehnungskoeffizient α₁ bis αₙ des weiteren Glasmaterials im Bereich 1,1*10⁻⁶K⁻¹ bis 4,0*10⁻⁶K⁻¹ liegt.

13. Körper nach einem der Ansprüche 7 bis 12,
**dadurch gekennzeichnet, dass**
das Glas- oder Glaskeramikmaterial des rohrförmigen Elementes Quarzglas und/oder
das weitere Glasmaterial des gesinterten Glases ein Borosilikatglas ist

14. Körper nach einem der Ansprüche 7 bis 13,
**dadurch gekennzeichnet, dass**
das weitere Glasmaterial Farbkomponenten umfasst.

15. Körper nach einem der Ansprüche 7 bis 14
**dadurch gekennzeichnet, dass**
das Material des metallischen Leiters eines der nachfolgenden Materialien ist:
- Wolfram
- Molybdän
- Kovar

## Claims

1. Method for producing a hermetic seal between a tubular element made of a glass or glass-ceramic material for a lamp body and a conductor formed with a further glass material in the form of a sintered glass, comprising the following steps:
- grinding of the further glass material to a glass powder (100);
- forming a granule from the ground glass powder (102);
- dry pressing the granule into a glass ring (104);
- sintering of the glass ring (106);
- providing the conductor with the glass ring (108);
- fusing the glass ring to the conductor and hermetically sealing the conductor and the tubular element with the glass ring (110) by fusion, such that the sintered glass comprises a proportion of 5 to 20 vol% of entrapped air bubbles.

2. Method according to claim 1,
**characterized in that**
color components are added to the glass powder.

3. Method according to one of claims 1 to 2,
**characterized in that**
after grinding the glass powder and before forming the granules, the glass powder is provided with an organic binder and is then atomized and/or
the glass powder is ground to a mean particle size in the range 5 to 20 µm and/or the granules obtained from the ground glass powder have a mean particle size in the range 25 to 150 µm.

4. Method according to at least one of claims 1 to 3,
**characterized in that**
the sintering of the further glass material is carried out at a sintering temperature of the further glass material at which the viscosity of the glass material is in the range 1*10⁷ to 1*10⁸ dPas, for preferably 5 to 30 minutes.

5. Method according to one of claims 1 to 4,
**characterized in that**
after sintering, the glass ring is mounted on the conductor and in a further temperature step the sintered compact is melted onto the conductor.

6. Method according to claim 5,
**characterized in that**
the melting of the glass ring onto the conductor is carried out at a viscosity of 10⁻³-10⁻⁶ dPas for 5 to 30 minutes.

7. Body, in particular lamp body, manufactured according to a method according to one of claims 1 to 6, comprising:
- a tubular element (1) made of a glass or glass-ceramic material, wherein at least one conductor, preferably a metallic conductor (3), is introduced into the tubular element (1) and at least
- one further glass material surrounds the conductor and is connected to the tubular element,
**characterized in that**
the further glass material (5) forms a hermetic seal between the tubular element (1) and the conductor, preferably metallic conductor (3), and the further glass material (5) comprises a sintered glass, in particular a sintered glass ring, which completely surrounds the metallic conductor after melting and hermetically seals it to the tubular element.

8. Body according to claim 7,
**characterized in that**
the further glass material has a first coefficient of expansion α₁ and the tubular element comprises a glass or glass-ceramic material having a second coefficient of expansion α₂ and the conductor has a third coefficient of expansion α₃ and the value of the first coefficient of expansion α₁ is between the value of the second coefficient of expansion α₂ and the third coefficient of expansion α₃.

9. Body according to claim 7 or 8,
**characterized in that**
a plurality of further glass materials have graded coefficients of expansion α₁ to αₙ and the tubular element comprises a glass or glass-ceramic material having a second coefficient of expansion αₙ₊₁ and the conductor has a third coefficient of expansion αₙ₊₂ and the values of the graded coefficients of expansion α₁ to αₙ are between the value of the second coefficient of expansion αₙ₊₁ and the third coefficient of expansion αₙ₊₂.

10. Body according to one of claims 7 to 9,
**characterized in that**
the transformation temperature Tg according to ISO 7884-8 of the further glass or glass-ceramic material is greater than 500°C, preferably greater than 550°C, in particular greater than 570°C.

11. Body according to one of claims 7 to 10,
**characterized in that**
the softening temperature according to ISO 7884-3 of the further glass or glass-ceramic material is at a viscosity of 10^{7,6} dPa*s of the glass material, preferably greater than 850°C, in particular greater than 900°C.

12. Body according to one of claims 7 to 11,
**characterized in that**
the coefficient of thermal expansion α₁ to αₙ of the further glass material is in the range 1.1*10⁻⁶K⁻¹ to 4.0*10⁻⁶K⁻¹.

13. Body according to one of claims 7 to 12,
**characterized in that**
the glass or glass-ceramic material of the tubular element is quartz glass and/or the further glass material of the sintered glass is a borosilicate glass.

14. Body according to one of claims 7 to 13,
**characterized in that**
the further glass material comprises color components.

15. Body according to one of claims 7 to 14,
**characterized in that**
the material of the metallic conductor is one of the following materials:
- tungsten;
- molybdenum;
- kovar.

## Revendications

1. Procédé pour la réalisation d'un joint hermétique entre un élément tubulaire fait d'un matériau à base de verre ou de vitrocéramique pour un corps de lampe et un conducteur avec un autre matériau vitreux sous la forme d'un verre fritté, comprenant les étapes suivantes :
- broyage de l'autre matériau vitreux pour obtenir une poudre de verre (100)
- formation de granulés à partir de la poudre de verre (102) broyée
- pressage à sec des granulés pour obtenir un anneau en verre (104)
- frittage de l'anneau en verre (106)
- montage de l'anneau en verre (108) sur le conducteur
- fusion de l'anneau en verre sur le conducteur et formation d'un joint hermétique pour le conducteur et l'élément tubulaire avec l'anneau en verre (110) par fusion, de telle façon que le verre fritté contienne une proportion de 5 à 20 % en volume de bulles d'air incluses.

2. Procédé selon la revendication 1, **caractérisé en ce que** la poudre de verre est additionnée de composants colorés.

3. Procédé selon l'une des revendications 1 à 2, **caractérisé en ce qu'**après le broyage de la poudre de verre et avant la formation des granulés, la poudre de verre est additionnée d'un liant organique puis pulvérisée et/ou la poudre de verre est broyée jusqu'à une grosseur de grains moyenne de 5 à 20 µm et/ou les granulés obtenus à partir de la poudre de verre broyée présentent une grosseur de grains comprise entre 25 et 150 µm.

4. Procédé selon l'une au moins des revendications 1 à 3, **caractérisé en ce que** le frittage de l'autre matériau vitreux est effectué à une température de frittage de l'autre matériau vitreux à laquelle la viscosité du matériau vitreux est comprise entre 1*10⁷ et 1*10⁸ dPa.s, pendant de préférence 5 à 30 minutes.

5. Procédé selon l'une des revendications 1 à 4, **caractérisé en ce qu'**après le frittage, l'anneau en verre est monté sur un conducteur et la pièce frittée est fondue sur le conducteur dans une autre étape de traitement thermique.

6. Procédé selon la revendication 5, **caractérisé en ce que** la fusion de l'anneau en verre sur le conducteur est effectuée à une viscosité de 10⁻³ à 10⁻⁶ dPa.s pendant 5 à 30 minutes.

7. Corps, en particulier corps de lampe, fabriqué par un procédé selon l'une des revendications 1 à 6, comprenant :
- un élément tubulaire (1) fait d'un matériau à base de verre ou de vitrocéramique, dans lequel un conducteur, de préférence un conducteur métallique (3), est inséré dans l'élément tubulaire (1), et au moins
- un autre matériau vitreux entourant le conducteur et relié à l'élément tubulaire,
**caractérisé en ce que** l'autre matériau vitreux (5) forme un joint hermétique entre l'élément tubulaire (1) et le conducteur, de préférence le conducteur métallique (3), et l'autre matériau vitreux (5) comprend un verre fritté, en particulier un anneau en verre fritté, qui entoure complètement le conducteur métallique après la fusion et l'isole complètement de de l'élément tubulaire de façon étanche.

8. Corps selon la revendication 7, **caractérisé en ce que** l'autre matériau vitreux a un premier coefficient de dilatation thermique α₁ et l'élément tubulaire comprend un matériau à base de verre ou de vitrocéramique ayant un deuxième coefficient de dilatation thermique α₂ et le conducteur a un troisième coefficient de dilatation thermique α₃ et la valeur du premier coefficient de dilatation thermique α₁ se situe entre celle du deuxième coefficient de dilatation thermique α₂ et le troisième coefficient de dilatation thermique α₃.

9. Corps selon la revendication 7 ou 8, **caractérisé en ce que** plusieurs autres matériaux vitreux ont des coefficients de dilatation thermique α₁ à αₙ échelonnés et l'élément tubulaire contient un matériau à base de verre ou de vitrocéramique ayant un deuxième coefficient de dilatation thermique αₙ₊₁ et le conducteur a un troisième coefficient de dilatation thermique αₙ₊₂ et les valeurs des coefficients de dilatation thermique échelonnés α₁ à αₙ se situent entre la valeur du deuxième coefficient de dilatation thermique αₙ₊₁ et le troisième coefficient de dilatation thermique αₙ₊₂.

10. Corps selon l'une des revendications 7 à 9, **caractérisé en ce que** la température de transformation Tg selon ISO 7884-8 de l'autre matériau à base de verre ou de vitrocéramique est supérieure à 500 °C, de préférence supérieure à 550 °C, en particulier supérieure à 570 °C.

11. Corps selon l'une des revendications 7 à 10, **caractérisé en ce que** la température de plastification selon ISO 7884-3 de l'autre matériau à base de verre ou de vitrocéramique à une viscosité de 1076 dPa.s du matériau vitreux est de préférence supérieure à 850 °C, en particulier supérieure à 900 °C.

12. Corps selon l'une des revendications 7 à 11, **caractérisé en ce que** le coefficient de dilatation thermique α₁ à αₙ de l'autre matériau vitreux se situe entre 1,1*10⁻⁶K⁻¹ et 4,0*10⁻⁶K⁻¹.

13. Corps selon l'une des revendications 7 à 12, **caractérisé en ce que** le matériau à base de verre ou de vitrocéramique de l'élément tubulaire est du verre au quartz et/ou l'autre matériau vitreux du verre fritté est un verre borosilicate.

14. Corps selon l'une des revendications 7 à 13, **caractérisé en ce que** l'autre matériau vitreux contient des composants colorés.

15. Corps selon l'une des revendications 7 à 14, **caractérisé en ce que** le matériau du conducteur métallique est un des matériaux suivants :
- tungstène,
- molybdène,
- kovar.
